(19) Europäisches Patentamt
European Patent Office
Office européen des brevets

(11) **EP 3 850 332 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **19769135.5**

(22) Anmeldetag: **12.09.2019**

(51) Internationale Patentklassifikation (IPC):
**G01L 25/00** *(2006.01)* **G01N 11/14** *(2006.01)*
**G01N 11/00** *(2006.01)*

(52) Gemeinsame Patentklassifikation (CPC):
**G01N 11/14; G01L 25/003;** G01N 2011/0006

(86) Internationale Anmeldenummer:
**PCT/EP2019/074417**

(87) Internationale Veröffentlichungsnummer:
**WO 2020/053356 (19.03.2020 Gazette 2020/12)**

(54) **VERFAHREN UND SYSTEM ZUR TARIERUNG UND/ODER KALIBRIERUNG EINES ROTATIONS-RHEOMETERS**

METHOD AND SYSTEM FOR TARING AND/OR CALIBRATING A ROTARY RHEOMETER

PROCÉDÉ ET SYSTÈME PERMETTANT DE TARER ET/OU D'ÉTALONNER UN RHÉOMÈTRE À ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2018 DE 102018122257**

(43) Veröffentlichungstag der Anmeldung:
**21.07.2021 Patentblatt 2021/29**

(73) Patentinhaber: **Brabender GmbH & Co. KG**
**47055 Duisburg (DE)**

(72) Erfinder:
• **KRAWEZ, Oleg**
**47445 Moers (DE)**

• **SCHÄFER, Viktor**
**40474 Düsseldorf (DE)**
• **SZCZESNY, David**
**42697 Solingen (DE)**

(74) Vertreter: **Michalski Hüttermann & Partner Patentanwälte mbB**
**Kaistraße 16A**
**40221 Düsseldorf (DE)**

(56) Entgegenhaltungen:
**WO-A1-90/04161          US-A- 3 292 423**
**US-A- 3 667 286          US-A- 4 630 468**
**US-A1- 2010 071 442     US-A1- 2015 233 807**
**US-B2- 8 230 723**

**Beschreibung**

Die Erfindung betrifft ein Verfahren und ein System zur Tarierung und/oder Kalibrierung eines Rotations-Rheometers, welches eine Messanordnung zur Aufnahme einer Testsubstanz zwischen zwei jeweils drehbar gelagerten und gegeneinander verdrehbaren Bauelementen aufweist.

Ein Rheometer, welches eine Messanordnung zur Aufnahme einer Testsubstanz zwischen zwei jeweils drehbar gelagerten und gegeneinander verdrehbaren Bauelementen aufweist, ist beispielsweise aus der Druckschrift DE 199 11 441 A1 bekannt. Das eine der Bauelemente ist als Messbecher und das andere der Bauelemente als Messzylinder ausgebildet. Die Testsubstanz befindet sich zusammen mit dem Messzylinder im Innenraum des Messbechers. Die US 3 292 423 beschreibt eine Vorrichtung zur Messung einer Viskosität einer Flüssigkeit. Es wird eine Vorrichtung beschrieben, die zwei parallele Oberflächen aufweist. Die erste Oberfläche kann über einen Motor drehend angetrieben werden. Die zweite Oberfläche kann über einen weiteren Motor drehend angetrieben werden.

Bei einem derartigen Rheometer treten ohne zuvor durchgeführte Tarierungs- und/oder Kalibrierungsmaßnahmen in der Regel systematische Messabweichungen auf. Unter Tarierung ist ein Nullpunktabgleich und unter Kalibrierung die Korrektur einer Abweichung von einem "Normal" zu verstehen.

Es ist Aufgabe der Erfindung ein Verfahren und ein System zur Tarierung und/oder Kalibrierung eines Rotations-Rheometers anzugeben, bei denen die verbleibende Abweichung möglichst gering ist.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils einzeln oder in Kombination einen Aspekt der Erfindung darstellen können.

Bei dem erfindungsgemäßen Verfahren zur Tarierung und/oder Kalibrierung eines Rotations-Rheometers, welches eine Messanordnung zur Aufnahme einer Testsubstanz zwischen zwei jeweils drehbar gelagerten und gegeneinander verdrehbaren Bauelementen aufweist, sind die folgenden Schritte vorgesehen:

(i) Übertragen eines Drehmoments bekannter Größe auf das erste Bauelement,
(ii) Messung eines resultierenden Drehmoments am zweiten Bauelement und
(iii) Erkennen von systematischen Messabweichungen bei dieser Messung und Korrektur dieser Messabweichungen,

wobei die Drehmoment-Messung bei sich drehenden Bauelementen erfolgt. Da bei einer solchen Messanordnung beim Messprozess an mindesten einer Stelle immer Reibung in Form von Gleitreibung auftritt, sollte auch die beim Tarieren/Kalibrieren durchgeführte Messung mit einer Drehzahl ungleich Null durchgeführt werden, um auch hier statt Haftreibung Gleitreibung voraussetzen zu können.

Gemäß einer bevorzugten Ausgestaltung der Erfindung ist vorgesehen, dass die Größe des auf das erste Bauelement übertragenen Drehmoments M (i) bei der Tarierung M = 0 N und (ii) bei der Kalibrierung M ≠ 0 N beträgt.

Gemäß einer weiteren bevorzugten Ausgestaltung der Erfindung ist vorgesehen, dass die Drehmoment-Messung eine Kraftmessung bezüglich einer vorgegebenen Hebelarmlänge ist. Eine solche Messung ist verhältnismäßig Präzise und dabei einfach durchzuführen. Eine in diesem Zusammenhang mögliche Haftreibungs-Problematik wird durch die Messung bei einer Drehzahl ungleich Null umgangen.

Gemäß noch einer weiteren bevorzugten Ausgestaltung der Erfindung ist die Drehzahl der Drehung im Bereich von 1 - 5 1/s.

Schließlich ist mit Vorteil vorgesehen, dass das eine der Bauelemente als Messbehälter und das andere der Bauelemente als Messkörper ausgebildet ist. Das Rheometer könnte beispielsweise analog zu dem in der Druckschrift DE 199 11 441 A1 beschriebenen Rheometer ausgebaut sein.

Das Verfahren wird insbesondere automatisch durchgeführt, ist dann also ein automatisiertes Verfahren.

Die Erfindung betrifft weiterhin ein Computerprogrammprodukt umfassend Programmteile, die in einem Prozessor eines computerbasierten Steuergerätes geladen zur Durchführung des vorstehend genannten Verfahrens eingerichtet sind.

Bei dem erfindungsgemäßen System zur Tarierung und/oder Kalibrierung eines Rotations-Rheometers, welches

(a) eine Messanordnung zur Aufnahme einer Testsubstanz zwischen zwei jeweils drehbar gelagerten und gegeneinander verdrehbaren Bauelementen,
(b) eine Antriebseinheit zum drehenden Antrieb des ersten Bauelements und
(c) eine Drehmoment-Messeinheit zur Drehmoment-Messung am zweiten Bauelement aufweist, ist vorgesehen, dass dieses System eingerichtet ist, die folgenden Schritte durchzuführen:

(i) Übertragen eines Drehmoments bekannter Größe auf das erste Bauelement mittels der Antriebseinheit,

(ii) Messung eines resultierenden Drehmoments am zweiten Bauelement mittels der Drehmoment-Messeinheit, wobei die Drehmoment-Messung bei sich drehenden Bauelementen erfolgt und

(iii) Erkennen von systematischen Messabweichungen bei dieser Messung und Korrektur dieser Messabweichungen.

Die im Zusammenhang mit dem Verfahren zur Tarierung und/oder Kalibrierung eines Rotations-Rheometers angesprochenen Ausgestaltungen gelten entsprechend auch für das System.

Nachfolgend wird die Erfindung unter Bezugnahme auf die anliegenden Zeichnungen anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können. Es zeigt:

Fig. 1: eine Messanordnung eines Rheometers zur Ermittlung des Verformungs- und/oder Fließverhaltens einer Testsubstanz in einer Schnittdarstellung und

Fig. 2: einen Messaufbau des Rheometers zur Durchführung eines Verfahrens zur Tarierung und/oder Kalibrierung des Rotations-Rheometers gemäß einer bevorzugten Ausgestaltung der Erfindung.

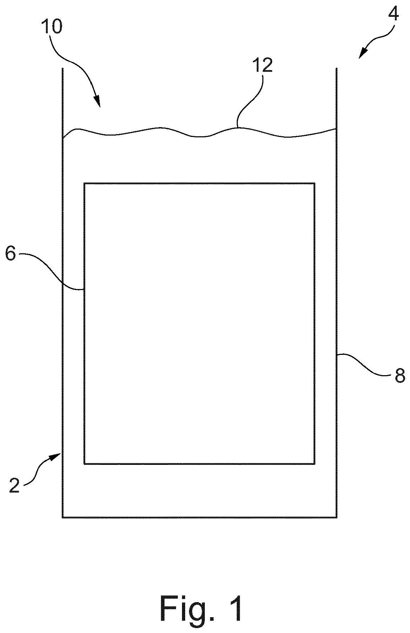

Die Fig. 1 zeigt eine Messanordnung 2 eines Rotations-Rheometers 4. Diese Messanordnung 2 weist zwei Bauelemente 6, 8 auf, die im vorliegenden Beispiel als Messkörper 6 und als Messgefäß 8 ausgebildet sind. Das Messgefäß 8 ist ein zu einer Seite hin offenes Messgefäß 8, welches becherartig ausgestaltet ist und in seinem Inneren einen Aufnahmeraum 10 für eine Testsubstanz 12 aufweist. Die Testsubstanz 12 ist in der Regel eine Probe, deren Verformungs- und/oder Fließverhalten über das Rheometer 4 bestimmt werden soll.

Der Messkörper 6 ist im drehbar gelagerten Messgefäß 8 drehbar angeordnet und bei eingefüllter Testsubstanz 12 nur über diese Testsubstanz 12 mit dem Messgefäß 8 verbunden. Mit anderen Worten ist die Messanordnung 2 also eine Messanordnung 2 zur Aufnahme einer Testsubstanz 12 zwischen zwei jeweils drehbar gelagerten und gegeneinander verdrehbaren Bauelementen 6, 8. Das (hier im Beispiel als Messkörper ausgebildete) erste Bauelement 6 ist (in der Regel über eine nicht gezeigte Welle) mit einer ebenfalls nicht dargestellten Antriebseinheit (Motor) verbunden. Das erste Bauelement wird daher auch als "Rotor" bezeichnet. Das (hier im Beispiel als Messgefäß ausgebildete) zweite Bauelement 8 wird auch als "Stator" bezeichnet, da es keine eigene Antriebseinheit für dieses zweite Bauelement 8 gibt.

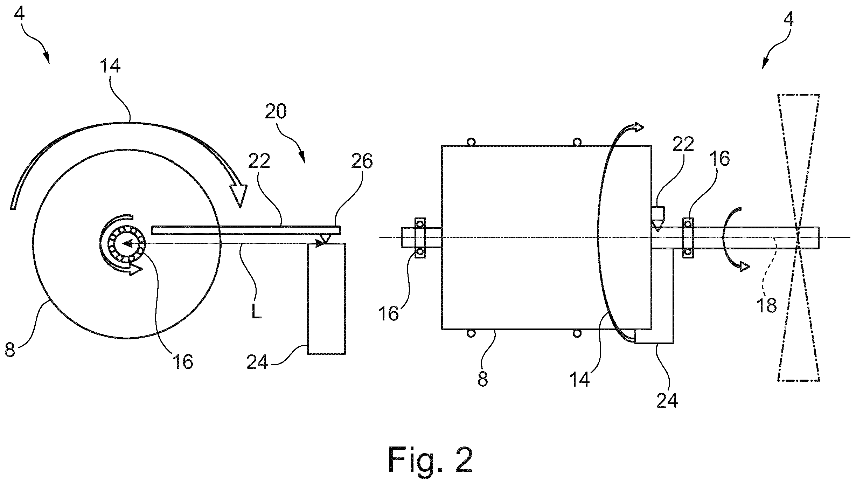

Die Fig. 2 zeigt einen zur Durchführung eines Verfahrens zur Tarierung und/oder Kalibrierung des Rotations-Rheometers 4 benötigten Messaufbau des Rheometers 4. Dabei ist der Aufbau links frontal und rechts von der Seite gezeigt. Bei dieser Darstellung des Messaufbaus ist lediglich das als Messgefäß ausgebildete zweite Bauelement 8 sichtbar. Das im Inneren des Messgefäßes angeordnete erste Bauelement 6 sowie die Testsubstanz 12 sind in dieser Darstellung nicht sichtbar.

Das erste (in Fig. 2 nicht dargestellte) Bauelement 6 ist über die Antriebseinheit drehend antreibbar (Pfeil 14). Über das angetriebene erste Bauelement 6 und die Testsubstanz 12 kann die Antriebseinheit indirekt auch auf das als Stator" bezeichnete zweite Bauelement 8 ein Drehmoment ausüben. Dazu sind beide Bauelemente 6, 8 drehend gelagert. Die Lager 16 des zweiten Bauelements 8 sind in Fig. 1 ebenso erkennbar wie die resultierende Achse 18, um die das zweite Bauelement 8 verdrehbar gelagert ist. Das entsprechende (Gesamt-)System zur Durchführung des Verfahrens zur Tarierung und/oder Kalibrierung des Rotations-Rheometers 4 umfasst nun weiterhin eine Drehmoment-Messeinheit 20 mit einem Hebelarm 22, der drehfest mit dem zweiten Bauelement 8 verbunden ist und mit einer Kraftmesseinrichtung 24 (KMD: Kraftmessdose), auf die ein freies Ende 26 des Hebelarms 22 wirkt. Der Hebelarm 22 hat eine bestimmte Hebelarmlänge L. Das System führt das Verfahren in der Regel voll- oder zumindest teilautomatisiert durch. Zu diesem Zweck weist das System weiterhin ein (hier nicht gezeigtes) Steuergerät auf, welches in der Regel computerbasiert ist, also einen Prozessor, einen (Daten-)Speicher sowie entsprechende Peripherie umfasst.

Es ergibt sich das erfindungsgemäße Verfahren zur Tarierung und/oder Kalibrierung des Rotations-Rheometers, welches die folgenden Schritte aufweist:

(i) Übertragen eines Drehmoments M mit M = 0 N oder M ≠ 0 N auf das erste Bauelement 6,

(ii) Messung eines resultierenden Drehmoments am zweiten Bauelement 8, wobei die Messung bei einer Drehzahl ungleich Null erfolgt, und

(iii) Erkennen von systematischen Messabweichungen bei dieser Messung und gegebenenfalls Korrektur dieser Messabweichungen.

Im Folgenden sollen die Wesentlichen Aspekte noch einmal mit anderen Worten wiedergegeben werden: Beim Tarieren- und Kalibrieren erfolgt die Durchführung im dynamischen Zustand (Motordrehzahl > 0). Im Gegensatz zu einer Durchführung bei einer Motordrehzahl = 0, bei der indeterministische Fehler durch die Haftreibung verursacht werden, lassen sich bei diesem Verfahren die Fehler signifikant reduzieren und die Messgenauigkeit erhöhen.

Es ergibt sich eine gemessene Kraft $F_{kmd}$ im dynamischen Zustand (Drehzahl ungleich Null) mit:

$$F_{kmd} = (M_r + M_{befG})/ L + F_{reibG} \text{ (beim Tarieren/Nullpunktabgleich)}$$

$$F_{kmd} = (M_r + M_{befG})/ L + F_{reibG} + F_{kal} \text{ (beim Kalibrieren);}$$

$M_r \neq 0$ = Drehmoment des zweiten Bauelements (Rotor) im statischen Zustand;
$M_{befG}$ = Drehmoment am Befestigungslager 16 mit Gleitreibung;
$F_{reibG}$ = Reibungskraft zwischen Hebel 26 und Kraftmesseinrichtung 24 in Gleitreibung und
$F_{kal}$ = Kraft, die beim Kalibrieren beispielsweise durch ein Kalibriergewicht erzeugt wird.

Dabei haben die Indizes folgende Bedeutung:

kmd:    Kraftmessdose,
r:      Rotor,
bef:    (Befestigungs-)Lager,
kal:    Kalibrierung und
reib:   Reibung (bzw. reibG: Gleitreibung).

Die Kalibrierung ist eine Korrektur einer Abweichung einer Größe (z.B. einer Kraft) von einem Normal. Dieses Normal wird zum Beispiel durch eine vorgegebene Gewichtskraft (über Kalibriergewichte mit bekannter Masse und einen entsprechenden Aufbau) gegeben.
Entscheidend ist nun, dass $M_{befG}$ und $F_{reibG}$ Gleitreibungen sind. Diese sind determiniert (bestimmbar) und im Vergleich zur Ruhereibungen deutlich kleiner. Durch diese Methode können der Tarier- und Kalibrierfehler signifikant reduziert werden.

Bezugszeichen

2     Messanordnung
4     Rotations-Rheometer
6     erstes Bauelement (Messgefäß)
8     zweites Bauelement (Messkörper)
10    Aufnahmeraum
12    Testsubstanz
14    Pfeil
16    Lager (zweites Bauelement)
18    Achse
20    Drehmoment-Messeinheit
22    Hebelarm
24    Kraftmesseinrichtung
26    freies Ende (Hebelarm)
L     Hebelarmlänge

**Patentansprüche**

1.  Verfahren zur Tarierung und/oder Kalibrierung eines Rotations-Rheometers (4), welches eine Messanordnung zur Aufnahme einer Testsubstanz (12) zwischen zwei jeweils drehbar gelagerten und gegeneinander verdrehbaren Bauelementen (6, 8) aufweist, wobei das Verfahren die folgenden Schritte aufweist:

    - Übertragen eines Drehmoments bekannter Größe mittels einer Antriebseinheit auf das erste Bauelement (6),
    - indirektes Ausüben eines Drehmoments über die Antriebseinheit indirekt auf das zweite Bauelement (8) über

4

das angetriebene erste Bauelement (6) und die Testsubstanz (12),
- Messung eines resultierenden Drehmoments am zweiten Bauelement (8),
wobei die Drehmoment-Messung bei sich drehenden Bauelementen (6, 8) erfolgt und
- Erkennen von systematischen Messabweichungen bei dieser Messung und Korrektur dieser Messabweichungen.

2. Verfahren nach Anspruch 1, **dadurch gekennzeichnet, dass** die Größe des auf das erste Bauelement (6) übertragenen Drehmoments M
bei der Tarierung M = 0 N und bei der Kalibrierung M ≠ 0 N beträgt.

3. Verfahren nach Anspruch 1 oder 2, **dadurch gekennzeichnet, dass** die Drehmoment-Messung eine Kraftmessung bezüglich einer vorgegebenen Hebelarmlänge (L) ist.

4. Verfahren nach einem der Ansprüche 1 bis 3, **dadurch gekennzeichnet, dass** die Drehzahl der Drehung im Bereich von 1 - 5 1/s liegt.

5. Verfahren nach einem der Ansprüche 1 bis 4, **dadurch gekennzeichnet, dass** das eine der Bauelemente (6, 8) als Messkörper und das andere der Bauelemente (8, 6) als Messbehälter ausgebildet ist.

6. Computerprogrammprodukt umfassend Programmteile, die in einem Prozessor eines computerbasierten Steuergerätes geladen zur Durchführung des Verfahrens nach einem der Ansprüche 1 bis 5 eingerichtet sind.

7. System zur Tarierung und/oder Kalibrierung eines Rotations-Rheometers (4), welches

- eine Messanordnung zur Aufnahme einer Testsubstanz (12) zwischen zwei jeweils drehbar gelagerten und gegeneinander verdrehbaren Bauelementen (6, 8),
- eine Antriebseinheit zum drehenden Antrieb des ersten Bauelements und
- eine Drehmoment-Messeinheit (20) zur Drehmoment-Messung am zweiten Bauelement (8)

aufweist, wobei das System eingerichtet ist, die folgenden Schritte durchzuführen:

- Übertragen eines Drehmoments bekannter Größe auf das erste Bauelement (6) mittels der Antriebseinheit,
- indirektes Ausüben eines Drehmoments über die Antriebseinheit indirekt auf das zweite Bauelement (8) über das angetriebene erste Bauelement (6) und die Testsubstanz (12),
- Messung eines resultierenden Drehmoments am zweiten Bauelement (8) mittels der Drehmoment-Messeinheit (20), wobei die Drehmoment-Messung bei sich drehenden Bauelementen (6, 8) erfolgt und
- Erkennen von systematischen Messabweichungen bei dieser Messung und Korrektur dieser Messabweichungen.

## Claims

1. Method for taring and/or calibrating a rotary rheometer (4), which comprises a measuring arrangement for receiving a test substance (12) between two components (6, 8), each of which is rotatably mounted and which can be rotated relative to one another, wherein the method includes the following steps:

transmitting a torque of known magnitude by means of a drive unit to the first component (6);
indirectly exerting a torque by the drive unit to the second component (8) via the driven first component (6) and the test substance (12);
measuring a resulting torque at the second component (8), wherein the torque measurement is carried out with the components (6, 8) rotating; and
detecting systematic measurement deviations in this measurement and correcting these measurement deviations.

2. Method according to claim 1, **characterized in that** the magnitude of the torque M transmitted to the first component (6) is M = 0 N during taring and M ≠ 0 N during calibration.

3. Method according to claim 1 or 2, **characterized in that** the torque measurement is a force measurement with respect to a predetermined lever arm length (L).

4. Method according to any one of claims 1 to 3, **characterized in that** the speed of rotation is in the range of 1 - 5 1/s.

5. Method according to any one of claims 1 to 4, **characterized in that** one of the components (6, 8) is configured as a measuring body and the other of the components (8, 6) is configured as a measuring container.

6. Computer program product comprising program parts which are loaded into a processor of a computer-based control device and configured to carry out the method according to any of claims 1 to 5.

7. System for taring and/or calibrating a rotary rheometer (4), which comprises:

a measuring arrangement for receiving a test substance (12) between two components (6, 8) which are respectively rotatably mounted and rotatable relative to one another;
a drive unit for rotatably driving the first component; and
a torque measuring unit (20) for torque measurement at the second component (8),
wherein the system is adapted to carry out the following steps:

transmitting a torque of known magnitude to the first component (6) by means of the drive unit;
indirectly exerting a torque by the drive unit to the second component (8) via the driven first component (6) and the test substance (12);
measuring a resulting torque at the second component (8) by means of the torque measuring unit (20), wherein the torque measurement is carried out with the components (6, 8) rotating; and
detecting systematic measurement deviations in this measurement and correcting these measurement deviations.

**Revendications**

1. Procédé de tarage et/ou d'étalonnage d'un rhéomètre rotatif (4), lequel présente un ensemble de mesure pour la réception d'une substance d'essai (12) entre deux éléments (6, 8) respectivement montés en étant rotatifs et pouvant être amenés en rotation l'un par rapport à l'autre, le procédé comprenant les étapes suivantes :

- la transmission d'un couple de grandeur connue au moyen d'une unité d'entraînement sur le premier élément (6),
- l'exercice indirect d'un couple par le biais de l'unité d'entraînement de manière indirecte sur le deuxième élément (8) par le biais du premier élément (6) entraîné et la substance d'essai (12),
- la mesure d'un couple résultant sur le deuxième élément (8), où la mesure du couple a lieu sur des éléments (6, 8) en rotation, et
- l'identification d'écarts de mesure systématiques lors de cette mesure et la correction de ces écarts de mesure.

2. Procédé selon la revendication 1, **caractérisé en ce que** la grandeur N du couple M transmis sur le premier élément (6) pour le tarage M = 0, et pour l'étalonnage M $\neq$ 0, est N.

3. Procédé selon la revendication 1 ou la revendication 2, **caractérisé en ce que** la mesure du couple est une mesure de force en fonction d'une longueur de bras de levier (L) prédéterminée.

4. Procédé selon l'une des revendications 1 à 3, **caractérisé en ce que** le nombre de tours de la rotation se situe dans la plage 1 à 5 l/s.

5. Procédé selon l'une des revendications 1 à 4, **caractérisé en ce qu'**un des éléments (6, 8) est conçu sous forme de corps de mesure et l'autre parmi les éléments (8, 6) est conçu en tant que récipient de mesure.

6. Produit-programme d'ordinateur comprenant des parties de programme qui sont installées dans un processeur d'un appareil de commande à base d'un ordinateur pour l'exécution du procédé selon l'une des revendications 1 à 5.

7. Système permettant le tarage et/ou l'étalonnage d'un rhéomètre rotatif (4), lequel présente

- un ensemble de mesure pour la réception d'une substance d'essai (12) entre deux éléments (6, 8) respectivement montés en étant rotatifs et pouvant être amenés en rotation l'un par rapport à l'autre,
- une unité d'entraînement pour l'entrainement en rotation du premier élément et
- une unité de mesure de couple (20) pour la mesure du couple sur le deuxième élément (8), le système étant conçu pour exécuter les étapes suivantes:
- la transmission d'un couple de grandeur connue sur le premier élément (6) au moyen de l'unité d'entraînement,
- l'exercice indirect d'un couple par le biais de l'unité d'entraînement de manière indirecte sur le deuxième élément (8) par le biais du premier élément (6) entraîné et la substance d'essai (12),
- la mesure d'un couple résultant sur le deuxième élément (8) au moyen de l'unité de mesure de couple (20), où la mesure du couple a lieu sur des éléments (6, 8) en rotation, et
- l'identification d'écarts de mesure systématiques lors de cette mesure et la correction de ces écarts de mesure.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19911441 A1

- US 3292423 A